# EUROPEAN PATENT APPLICATION

(11) **EP 3 792 332 A1**
(43) Date of publication of application: **17.03.2021**
(21) Application number: 18917934.4
(22) Date of filing: 10.05.2018
(51) Int. Cl.: C09K 9/00, C09D 5/26

(54) **MULTI-THERMOCHROMIC BEADS, MANUFACTURING METHOD THEREFOR, AND USE THEREOF**

(71) Applicant: BA Energy Co., Ltd., Gwangju 61089 (KR)
(72) Inventor: KANG, Tae Young, Naju-si Jeollanam-do 58217 (KR); SEO, Hyoung Woo, Gwangju 61026 (KR); PARK, Sang Ki, Gwangju 61218 (KR)
(74) Representative: Beck & Rössig European Patent Attorneys
(86) International application number: PCT/KR2018/005351
(87) International publication number: WO 2019/216456

(57) **Abstract**

The present disclosure relates to an exterior building material including multi-thermochromic beads (B), the colors of which thermally change into various colors according to temperature, a method of manufacturing the same, and the use of the multi-thermochromic beads. The present disclosure provides an exterior building material including multi-thermochromic beads (B) and a method of manufacturing the same, each of the multi-thermochromic beads including a polymer support (100) and a plurality of thermochromic particles (P) supported in the polymer support (100) and the colors of which thermally change into different colors according to temperature. The thermochromic particle (P) includes a core (10) including a thermochromic material and a phase-change material and a polymer shell (20) formed on the surface of the core (10). In the present disclosure, color changes into various colors according to temperature occur. Therefore, it is possible to actively adjust the temperature of a building, thereby improving thermal insulation and heating properties and securing a beautiful appearance.

## Description

### Technical Field

The present disclosure relates to multi-thermochromic beads, the colors of which change into various colors according to temperature, so that thermal insulation and heating properties are improved and a beautiful appearance is secured by, for example, actively adjusting the temperature of a building, a method of manufacturing the same, and the use of the multi-thermochromic beads.

### Background Art

In general, colors are expressed in buildings for the sake of appearance. Color is realized by applying colored paint to the wall or roof of a building, or by applying colored building materials (such as exterior finishing materials). However, this method has problems in that the color of the building is limited to the color selected at the time of construction, and cannot be linked to seasonal changes or temperature changes, resulting in a static appearance.

Accordingly, in recent years, technology for applying a thermochromic material (or temperature-sensitive material), the color of which changes according to temperature, to a building material such as cement, flooring, and wall exterior materials of buildings has been attempted. The color of such a building material is realized by the thermochromic material, and the building material may reflect or absorb heat according to the color thereof, thus securing thermal insulation and heating properties.

For example, Korean Patent Nos. 10-0890863, 10-0831425, 10-0666737, and 10-0461659, Korean Patent Application Publication No. 10-2016-0130961, and Japanese Patent Application Publication Nos. 2006-057293 and 2008-267010 disclose technologies related to the above.

However, the thermochromic building materials according to the conventional technologies have, for example, the following problems.

First, the thermochromic building materials according to the conventional technologies are difficult to impart with excellent thermal insulation and heating properties. In general, thermochromic materials, the colors of which are changed by heat, are very sensitive to the surrounding environment. When such a thermochromic material is simply mixed with cement or polymers as in the conventional technologies and then applied to a building material, the thermochromic material, which is very sensitive to the surrounding environment, fails over time to exhibit the intrinsic characteristics thereof. For example, it is difficult to maintain reversible and repeated color changes. Accordingly, the temperature sensitivity and coloring are reduced, and thermal insulation and heating properties are deteriorated.

Further, when using the conventional thermochromic building material, it is difficult to secure a beautiful appearance. In the related art, a thermochromic pigment is used as a thermochromic material in most cases. The color of the thermochromic pigment is capable of changing into only a single color under one specific temperature condition. Accordingly, the conventional thermochromic building material does not exhibit various colors, so it is difficult to secure a beautiful appearance of a building.

Meanwhile, the present disclosure is a result of research conducted with the support of the "Commercialization-Linked Technology Development Project (R & BD)" of the Ministry of Trade, Industry and Energy and the Korea Institute for Advancement of Technology (Project number: N0002439, Project name: Commercialization of energy-saving insulation materials using phase-change material and inorganic composite coating technology).

### Disclosure

### Technical Problem

Accordingly, an object of the present disclosure is to provide multi-thermochromic beads having improved properties, a method of manufacturing the same, and the use thereof.

A specific object of the present disclosure is to provide multi-thermochromic beads, the colors of which change into various colors according to temperature in an embodiment, thereby, for example, improving thermal insulation and heating properties of a building and securing a beautiful appearance thereof, a method of manufacturing the same, and the use thereof.

### Technical Solution

In order to accomplish the above objects, the present disclosure provides multi-thermochromic beads, the colors of which thermally change into various colors according to temperature.

According to an embodiment of the present disclosure, the multi-thermochromic bead includes:
a support, and
a plurality of thermochromic particles which are supported in the support and the colors of which thermally change into different colors according to temperature.

The thermochromic particles include:
a core including a thermochromic material and a phase-change material, and
a polymer shell formed on the surface of the core.

The present disclosure also provides a method of manufacturing a multi-thermochromic bead.

The method includes a first step of manufacturing a plurality of thermochromic particles, the colors of which thermally change into different colors according to temperature, and
a second step of supporting the plurality of thermochromic particles in a support.

According to the embodiment, the first step includes:
a first process of obtaining a particle-forming solution including a thermochromic material, a phase-change material, a polymer, and a solvent,
a second process of adding the particle-forming solution to an emulsification solution including an emulsifier, followed by agitation, thus obtaining an emulsion, and
a third process of adding a curing agent to the emulsion, followed by agitation, thus obtaining the thermochromic particles that include a core including the thermochromic material and the phase-change material and a polymer shell formed on the surface of the core through curing of the polymer.

Further, according to the embodiment, the second step includes:
process a) of obtaining a support-forming solution including a binder and the curing agent,
process b) of adding the plurality of thermochromic particles manufactured in the first step to the support-forming solution, followed by mixing, thus obtaining a bead-forming mixture solution, and
process c) of allowing the bead-forming mixture solution to drip on the emulsification solution, followed by curing, thus forming the multi-thermochromic bead in which the plurality of thermochromic particles is supported in the support formed through curing of the binder.

### Advantageous Effects

According to the present disclosure, thermal color changes into various colors according to temperature occur. Therefore, for example, it is possible to actively adjust the temperature of a building, thereby improving thermal insulation and heating properties and securing a beautiful appearance.

### Description of Drawings

FIG. 1 is a view showing the constitution of the cross-section of a thermochromic particle constituting a multi-thermochromic bead according to an embodiment of the present disclosure;
FIG. 2 is a view showing the constitution of the cross-section of the multi-thermochromic bead according to the embodiment of the present disclosure;
FIG. 3 shows a thermochromic band according to the temperature of the multi-thermochromic bead according to the embodiment of the present disclosure;
FIG. 4 shows the construction of the cross-section of a building material according to the embodiment of the present disclosure;
FIG. 5 is a mimetic view showing a process of manufacturing a thermochromic particle according to an Example of the present disclosure;
FIG. 6 shows the particle size distribution of thermochromic particles manufactured according to the Example of the present disclosure;
FIG. 7 shows an optical micrograph and an SEM image of the thermochromic particle manufactured according to the Example of the present disclosure; and
FIG. 8 is a differential scanning calorimeter (DSC) graph of the thermochromic particle manufactured according to the Example of the present disclosure.

### Best Mode

The term "and/or" used in the present disclosure is used to mean inclusion of one or more of the components listed beforehand and afterwards. The term "one or more" as used in the present disclosure means one or a plural number of two or more. In addition, terms such as "first", "second", "third", "fourth", and "fifth" in the present disclosure are used to distinguish one component from other components, and the respective components are not limited by the above terms.

According to a first aspect, the present disclosure provides multi-thermochromic beads, the colors of which change into various colors according to temperature. According to a second aspect, the present disclosure provides a method of manufacturing the multi-thermochromic beads. According to a third aspect, the present disclosure provides the use of the multi-thermochromic beads. Further, according to a fourth aspect, the present disclosure provides a building material including the multi-thermochromic beads. Moreover, according to a fifth aspect, the present disclosure provides a method of manufacturing the building material including the multi-thermochromic beads.

Hereinafter, embodiments of the present disclosure will be described with reference to the accompanying drawings. The accompanying drawings show exemplary embodiments of the present disclosure, which are provided only to aid understanding of the present disclosure. Further, in describing the present disclosure, detailed descriptions of related known general functions and/or configurations will be omitted.

### [1] Multi-thermochromic bead

As the multi-thermochromic beads according to the present disclosure, any beads may be included herein, as long as the colors of the beads are thermally changed into various colors according to temperature. In the present disclosure, ┌multi-thermochromic┘ means thermal color changes into various different colors, at least two different colors, according to the ambient temperature (heat). In an embodiment, the multi-thermochromic bead according to the present disclosure includes at least two thermochromic particles having different coloring and/or decolorizing properties. Hereinafter, in some cases, the multi-thermochromic bead according to the present disclosure is abbreviated as ┌bead┘, and the thermochromic particle is abbreviated as ┌particle┘.

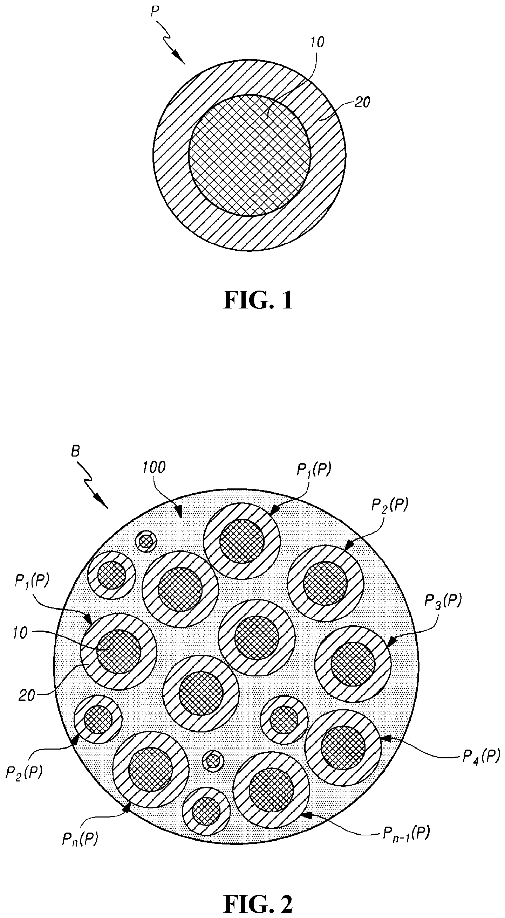

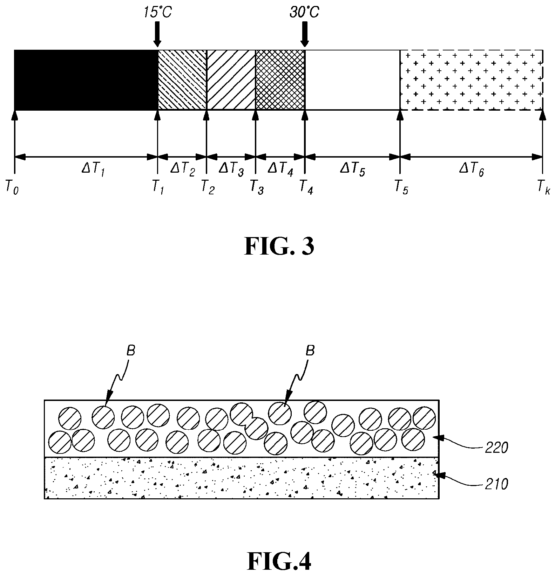

FIG. 1 is a view showing the constitution of the cross-section of a thermochromic particle P constituting a multi-thermochromic bead B according to an embodiment of the present disclosure. FIG. 2 is a view showing the constitution of the cross-section of the multi-thermochromic bead B according to the embodiment of the present disclosure. FIG. 3 shows a thermochromic band according to the temperature of the multi-thermochromic bead B according to the embodiment of the present disclosure. In the accompanying drawings, in order to clearly express each layer and region, the thickness may be exaggerated, and the scope of the present disclosure is not limited by thicknesses, sizes and/or ratios depicted in the drawings.

The multi-thermochromic bead B according to the present disclosure includes a support 100 and a plurality of thermochromic particles P supported in the support 100. In the present disclosure, the shape or size of the thermochromic particles P, the support 100, and/or the beads B is not limited. The thermochromic particles P, the support 100, and/or the beads B may have a cross-sectional shape such as that of, for example, a circle and/or an ellipse, and may have, for example, a spherical shape. In the present disclosure, ┌spherical shape┘ does not mean only a perfect spherical shape.

The thermochromic particle P may have a size (diameter) on the nanometer (nm) to micrometer (µm) scale, and may have a size of, for example, 0.01 to 100 µm. Specifically, the thermochromic particle P may have, for example, an average size of 0.1 to 50 µm, 0.2 to 30 µm, or 0.5 to 20 µm. Further, the support 100 and/or bead B may have a size (diameter) on the scale of micrometers (µm) or larger, and may have a size of, for example, 2 to 500 µm, or in some cases, a large diameter of 50 µm to 2 mm. Specifically, the support 100 and/or bead B may have, for example, an average size of 2 to 300 µm or 5 to 200 µm, without being limited thereto.

The thermochromic particle P has a core-shell structure. Specifically, the thermochromic particle P includes a core 10 including a thermochromic material and a phase-change material, and a polymer shell 20 formed on the surface of the core 10. The thermochromic material and the phase-change material form the core 10 of the particle P, and the core 10 is surrounded by the polymer shell 20 to encapsulate the same. The thermochromic material and the phase-change material constituting the core 10 are protected from the outside by the polymer shell 20. Accordingly, for example, even when a thermochromic material or a phase-change material sensitive to the surrounding environment is used, the thermochromic material or the phase-change material is protected from the surrounding environment, thus enabling reversible and repeated color change, and the temperature sensitivity and coloring properties may be secured.

The thermochromic material is not particularly limited, as long as the material is capable of realizing colors and the thermochromic material may be colored and/or decolorized according to temperature, thereby enabling thermal color changes thereof. The thermochromic material may be selected from dyes and/or pigments, and may include a leuco dye such as a lactone according to one embodiment.

Specific examples of the thermochromic material may include one or a mixture of two or more selected from dibutyl amino-6-methyl-7-anylnofluorane, 3-isobutyl ethyl amino-6-methyl-7-anylnofluorane, 3-diethylamino-6-methyl-7-anylnofluorane, 3-isopentyl ethyl amino-6-methyl-7-anylnofluorane, 3-N-ethyl-N-tetrahydrofurfurylamino-6-methyl-7-anylnofluorane, malachite green lactone, benzoyl leucomethylene blue, rhodamine B lactam, 3-dialkylamino-7-dialkylamino fluorane, 3-alkyl-2,2-spiro bi(benzo chromene), 3,3-bis-(2'-ethyl-2'-methylindole-3-yl) phthalide, lactone fluorane, 2-N,N-dibenzylamino-6-diethylaminofluorane, 6-diethylamino-1,3-dimethylfluorane, lactone xanthene, leukoramine, 2-(omega vinylene)-3,3-disubstituted-3-H indole, 1,3,3-trialkylindolinospiran, cholesteryl nonanoate, 1,2,3,-triazole, octadecylphosphonic acid, 3-diethylamino-6-methyl-7-chlorofluorane, 3-diethylamino-5-methyl-7-dibenzylamino fluoran, 3,6-methoxy fluoran, and derivatives thereof, but are not limited thereto.

The phase-change material (PCM) is a material that absorbs and releases latent heat during phase change (phase transformation) between solid and liquid or between liquid and gas according to a phase-change temperature, and has the same meaning as "phase transformation material" and "latent-heat storage material". The phase-change material is not particularly limited, as long as the material is capable of storing or releasing heat to maintain a constant temperature. The phase-change material may be selected from, for example, hydrocarbon-based and/or inorganic salt-based compounds. The thermochromic temperature range may be adjusted by the phase-change material, so that the thermochromic particle P may have coloring and decolorizing properties according to temperature. That is, the thermochromic material may be colored to have any color or decolorized in a predetermined temperature range due to the phase-change material.

Specific examples of the phase-change material may include one or a mixture of two or more selected from 1-dodecanol, paraffin oil, formalin acid, lactic acid, methyl palmitate, camphenilone, docosyl bromide, caprylone, phenol, heptadecanone, 1-cyclohexyloctadecane, 4-heptadecanone, P-joluidine, cyanamide, methyl eicosanoate, 3-heptadecanone, 2-heptadecanone, hydrocinnamic acid, cetyl alcohol, A-neptylamine, camphene, O-nitroaniline, 9-heptadecanone, thymol, methyl behenate, diphenylamine, P-dichlorobenzene, oxalate, hypoic acid, O-xylene dichloride, B-chlorogenic acid, chloroacetic acid, nitronaphthalene, trimyristin, heptaundecylic acid, A-chlorogenic acid, bee wax, glycolic acid, P-bromophenol, azobenzene, acrylic acid, dinto toluene (2,4), phenyl acetic acid, thiosinamine, bromocamphor, durene, benzyl, methyl bromobenzoate, alpha naphthol, glutaric acid, p-xylene dichloride, catechol, quinone, acetanilide, succinic anhydride, benzoic acid, stilbene, and derivatives thereof, but are not limited thereto.

The polymer shell 20 is, for example, transparent and/or translucent. The polymer shell 20 may be any one that is capable of protecting the core 10 from the outside and providing excellent mechanical strength to the particles P. The polymer shell 20 includes at least a polymer, but the polymer is not particularly limited as long as the polymer is capable of forming a wall film (shell) for protecting the core 10. Further, the polymer shell 20 may be formed of one layer or multiple layers, that is, two or more layers, on the surface of the core 10.

Specific examples of the polymer constituting the polymer shell 20 may include any one or a mixture of two or more among polyurethane, polyurea, polycarbonate, epoxy, polystyrene, polyethylene, polypropylene, polyester, polyether, polyvinyl alcohol, acrylic resins, polyamide, polymethyl methacrylate, ethylene/vinyl acetate copolymers, melamine resins, cellulose, isobornyl methacrylate and (meth)acrylic acid copolymers, nylon, gelatin, formaldehyde, melanin, and (co)polymers thereof, but are not limited thereto.

The multi-thermochromic bead B according to the present disclosure includes a plurality of thermochromic particles P as described above. Specifically, the multi-thermochromic bead B according to the present disclosure includes a spherical support 100 and a plurality of thermochromic particles P supported in the support 100 to be fixed to the inside thereof. Accordingly, the thermochromic material and the phase-change material included in the particle P are doubly protected. That is, the thermochromic material and the phase-change material included in the core 10 of the particle P are primarily protected from the outside by the outermost support 100, and are secondarily protected by the polymer shell 20 surrounding the surface.

The support 100 is, for example, transparent and/or translucent. The support 100 is not particularly limited, as long as the support is capable of supporting the thermochromic particle P. Further, the support 100 may have thermal insulation so as to increase the mechanical properties of the beads B and prevent heat from being easily released to the outside. The support 100 includes at least a binder capable of supporting and fixing the particles P, and the binder may be selected from adhesive synthetic polymers and/or natural polymers. Further, the binder has adhesiveness and elasticity, and may be selected from, for example, elastic bodies such as rubber-based, silicone-based, and/or synthetic resin elastomers.

Specific examples of the binder constituting the support 100 may include any one or a mixture of two or more among polydimethylene siloxane (PDMS), polyurethane, polyurea, polycarbonate, epoxy, polystyrene, polyethylene, polypropylene, polyester, polyether, polyvinyl alcohol, acrylic resins, polyamide, polymethyl methacrylate, ethylene/vinyl acetate copolymers, melamine resins, cellulose, isobornyl methacrylate and (meth)acrylic acid copolymers, nylon, gelatin, formaldehyde, melanin, and (co)polymers thereof, but are not limited thereto.

The multi-thermochromic bead B according to the present disclosure includes a plurality of thermochromic particles P, the colors of which change into different colors according to temperature as mentioned above, so that the color of the bead is changed into various colors according to the ambient temperature. In the present disclosure, the ┌plurality of thermochromic particles P, the colors of which change into different colors according to temperature┘ refers to a plurality of thermochromic particles P having different coloring and/or decolorizing properties according to temperature due to different thermochromic materials and/or different phase-change materials included in the cores 10. This will be described in more detail with reference to FIGS. 2 and 3 as follows.

First, referring to FIG. 2, a plurality of thermochromic particles P is supported in one bead B. That is, the bead B includes n groups of thermochromic particles P, the colors of which change into different colors according to temperature. More specifically, the bead B includes a first thermochromic particle P₁, a second thermochromic particle P₂, a third thermochromic particle P₃, a fourth thermochromic particle P₄ .... an n-1-th thermochromic particle Pₙ₋₁ and an n-th thermochromic particle Pₙ. Here, n is a natural number of 2 or more. The upper limit of n is not limited, and n is, for example, a natural number of 20 or less, or 10 or less. The n thermochromic particles P (P₁, P₂, P₃, P₄ .... Pₙ) are different from each other, and the colors thereof are thermally changed into different colors according to temperature (coloring and/or decolorizing).

According to an embodiment, the plurality of (n) thermochromic particles P (P₁, P₂, P₃, P₄ .... Pₙ) may include different types of one or more materials selected from the thermochromic material and the phase-change material included in the core 10 to thus thermally change the colors thereof into different colors according to temperature. For example, when the thermochromic material included in the core 10 of the first thermochromic particle P₁ is Q₁ and the phase-change material therein is R₁, when the thermochromic material included in the core 10 of the second thermochromic particle P₂ is Q₂ and the phase-change material therein is R₂, when the thermochromic material included in the core 10 of the third thermochromic particle P₃ is Q₃ and the phase-change material therein is R₃, when the thermochromic material included in the core 10 of the fourth thermochromic particle P₄ is Q₄ and the phase-change material therein is R₄, and when the thermochromic material included in the core 10 of the n-th thermochromic particle Pₙ is Qₙ and the phase-change material therein is Rₙ, Q₁ ≠ Q₂ ≠ Q₃ ≠ Q₄ ≠ Qₙ and/or R₁≠ R₂ ≠ R₃ ≠ R₄ ≠ Rₙ. Therefore, the colors of the thermochromic particles P₁, P₂, P₃, P₄ .... Pₙ according to temperature are different (P₁ ≠ P₂ ≠ P₃ ≠ P₄ ≠ Pₙ).

As described above, the plurality of (n) thermochromic particles P (P₁ to Pₙ) has a structure of the core 10 and the shell 20, the thermochromic materials Q₁, Q₂, Q₃, Q₄ .... Qₙ included in the individual cores 10 are different from each other, and/or the phase-change materials R₁, R₂, R₃, R₄ .... Rₙ therein are different from each other. Accordingly, for example, the colors of the particles are different from each other due to the thermochromic materials (dyes), or the colors of the particles are changed into different colors according to temperature due to the differences of coloring and/or decolorizing properties according to temperature caused by the phase-change materials. The thermochromic materials and the phase-change materials included in the thermochromic particles P (P₁ to Pₙ) may be selected from, for example, the compounds as mentioned above, and each of the particles may include one type or two or more different types of thermochromic materials and phase-change materials. For example, the core 10 of the first thermochromic particle P₁ may include one type of thermochromic material and one type of phase-change material, or may include one type of thermochromic material and two or more types of phase-change materials. In another example, the core 10 of the first thermochromic particle P₁ may include two or more types of thermochromic materials and two or more types of phase-change materials. The cases of the second to n-th thermochromic particles Pₙ are the same as the above case.

Further, each of the thermochromic particles P (P₁ to Pₙ) is provided in a plural number. That is, the bead B includes the first to n-th thermochromic particles P₁, P₂, P₃, P₄ .... Pₙ, and also includes a plurality of first thermochromic particles P₁ and a plurality of second thermochromic particles P₂. The third to n-th thermochromic particles P₃ to Pₙ are also included in a plural number, as in the above.

The bead B according to the present disclosure includes a plurality of (n) thermochromic particles P (P₁, P₂, P₃, P₄ .... Pₙ) as in the above, thus developing various colors according to temperature, but the colors thereof are not limited. The bead B may have, for example, a color having an RGB value between 0 (zero) and 255. Specifically, for example, the bead B may exhibit colors such as black, red, blue, green, yellow, gray, and white colors according to temperature.

FIG. 3 is for explaining the thermochromic properties of the bead B according to an embodiment of the present disclosure, which illustrates color bands for each temperature section. In the description with reference to FIG. 3, the case of a total of four (4 groups) thermochromic particles P (P₁ to P₄), that is, first to fourth thermochromic particles P₁, P₂, P₃, and P₄, is described as an example.

The four thermochromic particles P₁, P₂, P₃, and P₄ include different thermochromic materials (dyes) and/or different phase-change materials included in the cores 10 thereof, thus exhibiting different coloring and decolorizing properties according to temperature. In a first temperature section (ΔT₁) (ΔT₁ = T₁ T₀), at least the first thermochromic particle P₁ may be colored, and the second to fourth thermochromic particles P₂ to P₄ may be decolorized, so the bead B may be colored to have, for example, a black color. Additionally, in a second temperature section (ΔT₂) (ΔT₂ = T₂ - T₁, T₂ > T₁), the first thermochromic particle P₁ may be decolorized and at least the second thermochromic particle P₂ may be colored, thus developing a red color. Moreover, in a third temperature section (ΔT₃) (ΔT₃ = T₃ - T₂, T₃ > T₂), the first and second thermochromic particles P₁ and P₂ may be decolorized and at least the third thermochromic particle P₃ may be colored, thus developing a blue color. In a fourth temperature section (ΔT₄) (ΔT₄ = T₄ - T₃, T₄ > T₃), the first to third thermochromic particles P₁ to P₃ may be decolorized and at least the fourth thermochromic particle P₄ may be colored, thus developing a yellow or green color.

Further, in a fifth temperature section (ΔT₅) (ΔT₅ = T₅ - T₄, T₅ > T₄), the first thermochromic particle P₁ may be decolorized and two or more selected from the second to fourth thermochromic particles P₂ to P₄ may be colored, so the bead B may be colored to have, for example, a white color. The white color may be realized by a combination of colors developed from two or more particles P₂ to P₄. Specifically, for example, in the fifth temperature section (ΔT₅), the white color may be developed using RGB of red, green, and blue colors developed from the three particles P₂ to P₄. Additionally, in a sixth temperature section (ΔT₆) (ΔT₆ = Tₖ - T₅, Tₖ > T₅), various colors such as gray, green, and/or orange colors may be developed.

As in the above, in the case of the bead B according to the present disclosure, any one or two or more thermochromic particles P (P₁ to Pₙ) may be colored and decolorized according to a temperature section (ΔT₁ to ΔT₆), thereby causing color changes into various different colors. For example, as shown in FIG. 3, as the temperature increases, thermal color changes may occur in the order of black, red, blue, yellow, and white colors.

The color of the bead B according to the present disclosure may be changed, for example, at -150 to 200°C. That is, the temperature range at which the color change is possible is -150 to 200°C, and T₀ may be -150°C and Tₖ may be 200°C in FIG. 3. Specifically, for example, the temperature range at which the color change is possible may be -100 to 120°C (To = -100°C and Tₖ = 120°C), but is not limited thereto.

Further, the bead B according to the present disclosure may have two or more temperature sections (ΔT₁ to ΔT₆) and colors within the above-described temperature range (T₀ to Tₖ). For example, the number of temperature sections (ΔT₁ to ΔT₆) and the number of colors may be 3 or more, or 4 or more. The upper limits thereof are not limited, but may be, for example, 20 or less, or 10 or less. FIG. 3 shows thermal color changes into six colors in six temperature sections (ΔT₁ to ΔT₆).

Moreover, the temperature difference (ΔT) at which the color of the bead B according to the present disclosure is changed may be, for example, 3 to 15°C or higher. That is, in FIG. 3, each temperature section (ΔT₁ to ΔT₆) may be 3 to 15°C or higher. Specifically, for example, the temperature section may be 5 to 10°C or higher.

According to an embodiment of the present disclosure, the bead B according to the present disclosure may be colored to have a black color at about 12 to 18°C or lower, may be decolorized to remove the black color at a temperature of higher than 12 to 18°C, and may be colored to have a white color at a temperature of about 27 to 33°C or higher. Specifically, in FIG. 3, T₁ may be 12 to 18°C, coloring into the black color may occur at a temperature of T₁ or lower, that is, in the first temperature section (ΔT₁), and decolorizing may occur to remove the black color at a temperature higher than T₁. In addition, T₄ may be 27 to 33°C, and coloring into the white color may occur at a temperature higher than T₄, that is, in the fifth temperature section (ΔT₅).

Further, in the temperature section between T₁ and T₄, that is, in the second to fourth temperature sections (ΔT₂ to ΔT₄), coloring into one or more colors selected from red, blue, and yellow colors may occur. Specifically, for example, as shown in FIG. 3, coloring into red, blue, and yellow colors may sequentially occur in the second to fourth temperature sections (ΔT₂ to ΔT₄) between T₁ and T₄, respectively. Specifically, in FIG. 3, ΔT₁ = black color, ΔT₂ = red color, ΔT₃ = blue color, ΔT₄ = yellow color, and ΔT₅ = white color. Moreover, in FIG. 3, T₂ may be 19 to 22°C, T₃ may be 23 to 26°C, and T₅ may be 34 to 45°C, without limitation thereto.

More specifically, for example, in the first temperature section (ΔT₁) of about 15°C (T₁) or lower, coloring into the black color may occur. Subsequently, decolorizing may occur to remove the black color at a temperature higher than 15°C (T₁), and coloring into the white color may occur in the fifth temperature section (ΔT₅) of about 30°C (T₄) or higher. In addition, in a temperature range higher than 15°C (T₁) and lower than 30°C (T₄), that is, in the second to fourth temperature sections (ΔT₂ to ΔT₄), the color may be actively changed in the order of red, blue, and yellow colors as the temperature increases. In this case, in FIG. 3, T₂ may be 20°C, T₃ may be 25°C, and T₅ may be 35°C or higher, without limitation thereto.

As described above, when the color is changed in the order of black, red, blue, yellow, and white colors in the temperature sections (ΔT₁ to ΔT₅), respectively, the beads may be helpfully used for building materials. That is, in the case of winter, with an average air temperature of about 15°C or lower, a heating property may be secured due to the absorption of heat (sunlight) through coloring into the black color. In the case of summer, with an average air temperature of about 30°C or higher, thermal insulation (heat-absorption prevention) may be secured due to the reflection of heat (sunlight) through coloring into the white color. Further, color design may be achieved by coloring into red, blue, and yellow colors between 15°C and 30°C. Accordingly, unlike conventional building materials that develop one color only under one specific temperature condition, it is possible to secure excellent heating properties and thermal insulation according to seasonal changes in winter and summer and also to actively realize various colors according to temperature changes, thus imparting a beautiful appearance (color design) to the building.

The multi-thermochromic beads B according to the present disclosure described above may be manufactured using various methods. Hereinafter, while explaining a method of manufacturing the multi-thermochromic beads B according to the present disclosure, specific embodiments of the multi-thermochromic beads B according to the present disclosure will also be described. The manufacturing method of the present disclosure described below serves to facilitate the manufacture of the multi-thermochromic beads B, and also promotes the particle size uniformity of thermochromic particles P. However, the multi-thermochromic beads B according to the present disclosure are not limited to those manufactured by the manufacturing method described below.

### [2] Manufacture of multi-thermochromic beads

The method of manufacturing the beads B according to the present disclosure includes a first step of manufacturing a plurality of thermochromic particles P, the colors of which thermally change into different colors according to temperature, and a second step of supporting the plurality of thermochromic particles P in a support 100. The embodiment for each step will be described as follows.

### <First step> Manufacture of thermochromic particles P

In this first step, a thermochromic particle P having a structure of a core 10 and a shell 20 is manufactured. The first step includes a first process of obtaining a particle-forming solution including a thermochromic material, a phase-change material, a polymer, and a solvent, a second process of adding the particle-forming solution to an emulsification solution including an emulsifier, followed by agitation, thus obtaining an emulsion, and a third process of adding a curing agent to the emulsion, followed by agitation, thus obtaining the thermochromic particles P.

In the first process, the types of thermochromic material, phase-change material, and polymer are as described above. The solvent is not limited, as long as the solvent is capable of dissolving or dispersing at least the polymer. Such a solvent may be selected from water and/or a hydrocarbon-based organic solvent. The type of solvent may depend on the type of polymer, but the solvent may be selected from, for example, alcohols, ketones, and/or glycols, and specific examples thereof may be selected from methanol, ethanol, isopropanol, and/or methyl ethyl ketone.

Moreover, in the first process, for example, the mixing of the particle-forming solution may be performed with agitation at 100 to 1000 rpm at a temperature of 50 to 120°C. When the temperature at the time of mixing is very high, since the vaporization of the solvent is rapid, pot life may be reduced. When the temperature is very low, the solubility of the phase-change material and/or polymer may be reduced.

Further, in the first process, for example, 0.1 to 5 parts by weight of the thermochromic material, 1 to 50 parts by weight of the phase-change material, 3 to 150 parts by weight of the polymer, and 4 to 200 parts by weight of the solvent may be mixed and agitated to obtain the particle-forming solution, but the amounts of the individual components that are used are not limited. The content unit ┌parts by weight┘ used in the present disclosure may mean the weight in grams (g) or kilograms (kg), or may mean a weight ratio with other components. For example, ┌0.1 to 5 parts by weight of the thermochromic aterial┘ and ┌1 to 50 parts by weight of the phase-change material┘ may mean the use of 0.1 to 5 g of the thermochromic material and 1 to 50 g of the phase-change material or the use of 0.1 to 5 kg of the thermochromic material and 1 to 50 kg of the phase-change material, or may mean the use of the thermochromic material and the phase-change material at a weight ratio of 0.1 to 5 : 1 to 50. The same applies below.

According to an exemplary embodiment, the particle-forming solution may further include a dereloper. That is, in the first process, the thermochromic material, the phase-change material, the polymer, and the solvent are mixed, but in some cases, the dereloper may be further added and mixed. The dereloper may be added in order to improve the coloring properties of thermochromic materials (such as leuco dyes). The dereloper may serve to improve the coloring property of lactone-based dyes and may be selected from, for example, phenol-based compounds and/or derivatives thereof, and as one example, alcohols may be used. This dereloper may be added in an amount of 0.04 to 4 parts by weight.

In the second process, the particle-forming solution obtained in the first process is added to the emulsification solution, followed by mixing and agitation to thus perform emulsifying. The emulsification solution may include an emulsifier and a solvent. The type of solvent constituting the emulsification solution may depend on the type of emulsifier, but the solvent may include at least water. Optionally, a hydrocarbon-based organic solvent may be further included.

The emulsifier may be any one that is capable of emulsifying the particle-forming solution into a spherical shape. The emulsifier may be selected from, for example, carboxylate, sulfonate, sulfuric ester salts, and/or phosphate ester salts. Examples of the carboxylate may include alkali salts of higher fatty acid, N-acrylic amino acid salts, alkyl ether carbonate, and/or acylated peptide. Examples of the sulfonate may include an alkyl sulfonate, alkylbenzene and alkylamino acid salts, alkyl naphthalene sulfonate, and/or sulfosuccinate. Further, examples of the sulfuric ester salt may include alkyl sulfate, alkyl ether sulfate, alkylaryl ether sulfate, and/or alkylamide sulfate. Examples of the phosphate ester salt may include alkyl phosphate, alkyl ether phosphate, and alkylaryl ether phosphate. As the emulsifier, surfactants other than the compounds mentioned above may be used.

The emulsification solution may include 1 to 50 parts by weight of the emulsifier and 30 to 1500 parts by weight of the solvent (such as water). Preferably, the carboxylate and the solvent (such as water) may be mixed for use as the emulsification solution, and for the purpose of dispersibility of the carboxylate, it is preferable to perform the mixing at a temperature of 8°C or higher. Specifically, in consideration of the dispersibility of the carboxylate and the prevention of vaporization of the solvent (such as water), it is preferable to perform mixing and agitation at a temperature of 8 to 100°C or 50 to 60°C.

Further, in the second process, the particle-forming solution and the emulsification solution may be mixed and agitated in a homogenizer, and may be agitated at an agitation speed of 4,000 to 12,000 rpm to be emulsified. When the agitation speed is less than 4,000 rpm, the size of a particle emulsion may be excessively increased and the particle size uniformity may be reduced. When the agitation speed is more than 12,000 rpm, it may be difficult to form the particle emulsion, and dispersibility may be reduced. In consideration of this point, in the second process, it is preferable to perform emulsification using agitation at an agitation speed of 7,000 to 9,000 rpm for about 10 minutes or more. As experimental considerations in the present disclosure, when the agitation is performed at 7,000 to 9,000 rpm in the second process, it can be seen that the yield of the thermochromic particles P is high and that thermochromic particles P having a uniform particle size are capable of being formed. Specifically, the thermochromic particles P may have a size in the range of about 0.5 to 3 µm, and thermochromic particles P having a narrow particle size distribution and a uniform size may be manufactured with high yield. This can be confirmed in the following Examples.

In the third process, a curing agent is added to the emulsion obtained in the second process, followed by agitation, thus performing curing (encapsulation). The curing agent may be mixed with a solvent to be added. The type of solvent mixed with the curing agent may depend on the type of curing agent, but examples of the solvent may include water and/or a hydrocarbon-based organic solvent. 0.3 to 3 parts by weight of the curing agent and 3 to 15 parts by weight of the solvent (such as water) may be mixed and then used. Specifically, for example, 0.9 to 2.5 parts by weight of the curing agent and 6 to 9.5 parts by weight of the solvent (such as water) may be mixed and then used.

The curing agent may be any one that is capable of curing the polymer to form the polymer shell 20 on the surface of the core 10. The curing agent may be selected depending on the type of polymer, and may be selected from, for example, amines and alcohols. Specific examples of the curing agent may be selected from among 1,4-diacarbicyclo[2,2,2]octane, (2-dimethylaminoethyl) ether, trimethylaminoethylethanolamine, pentamethyldiethylenetriamine, dimethylethanolamine, dimethylaminopropylamine, normal-ethyl morpholine, N,N-dimethylaminoethyl morpholine, N,N-dimethylcyclohexylamine, 2-methyl-2-azanorbornane, ethylene glycol, propylene glycol, glycerol, trimethylolpropane, hexanetriol, pentatriol, diethylene glycol, tripropylene glycol, polyoxytetramethylene glycol, polyoxyhexamethylene glycol, polyoxynonamethylene glycol, polyoxydetamethylene glycol, polyoxydodecamethylene glycol, triethylene glycol, 1,4-butylene glycol, 1,3-butylene glycol, 1,6-hexanediol, trimethylolethane, trimethylolpropane, 1,2,6-hexatriol, pentatriol, dipentatriol, tripentatriol, polypentatriol, sorbitol, methylglucoside, and/or sucrose.

Further, in the third process, the emulsion and the curing agent may be mixed and agitated in a homogenizer, and it is preferable to perform mixing and agitation at a speed of 100 to 1000 rpm for 3 to 12 hours, thereby achieving curing (encapsulation). More preferably, in consideration of the yield, size, and uniformity (particle size distribution) of the thermochromic particles P, it is preferable to perform mixing and agitation at an agitation speed of 500 to 700 rpm for 7 hours or more, thereby achieving thermal curing (encapsulation). The temperature at which the mixing and agitation are performed may be any temperature at which the polymer is capable of being cured. The temperature may depend on the type of polymer and/or curing agent. However, the mixing and agitation may be performed, for example, at a temperature of 20 to 120°C, thereby achieving thermal curing.

According to a preferred embodiment, the third process may include, after adding the curing agent to the emulsion, step 1) of performing first agitation at a temperature that is lower than the curing temperature of the polymer and step 2) of performing second agitation at the curing temperature of the polymer. More specifically, preferably, in the step 1), the agitation (first agitation) is performed at the temperature lower than the curing temperature of the polymer at an agitation speed of 600 to 700 rpm for 30 minutes to 2 hours. In step 2), the temperature is increased to the curing temperature of the polymer, and agitation (second agitation) is then performed at an agitation speed of 500 to 600 rpm for 5 hours or more, thereby achieving thermal curing. The agitation time in step 2) may be, for example, 5 to 10 hours. In the case of performing the third process through the two steps as described above, the emulsion and the curing agent may be sufficiently dispersed in step 1) and then cured in step 2) to thus generate the thermochromic particles P with high yield. Moreover, at least the agitation speed (500 to 600 rpm) and the agitation time (7 hours or more) of step 2) are useful in determining yield, size, and particle size uniformity of the thermochromic particles P.

When the curing (encapsulation) is performed through the third process as described above, the thermochromic particle P, which includes at least the core 10 including the thermochromic material and the phase-change material and the polymer shell 20 formed on the surface of the core 10 through curing of the polymer, may be generated at high yield. Thereafter, for example, filtration and/or centrifugation are performed to obtain the thermochromic particles P.

Further, in this first step, a plurality (n groups) of thermochromic particles P (P₁, P₂, P₃, P₄ .... Pₙ) having different coloring and decolorizing properties according to temperature are manufactured. To this end, in this first step, the first process to the third process are set as one cycle process. The cycle process is performed n or more times (n being a natural number of 2 or more) to manufacture the plurality (n groups) of thermochromic particles P (P₁, P₂, P₃, P₄ .... Pₙ). Different types of thermochromic materials and/or phase-change materials are used in the first process of each of n cycle processes so that the thermochromic particles P (P₁, P₂, P₃, P₄ .... Pₙ) manufactured in each cycle process have different coloring and decolorizing properties according to temperature.

For example, when the four thermochromic particles P₁, P₂, P₃, and P₄ are manufactured, the cycle process as described above may be performed four times. This first step includes the first to fourth cycle processes, and different types of thermochromic materials and/or phase-change materials are used in the first process of each of the first to fourth cycle processes. Specifically, a thermochromic material Q₁ and a phase-change material R₁ are used in the first process of the first cycle process, a thermochromic material Q₂ and a phase-change material are used in the first process of the second cycle process, a thermochromic material Q₃ and a phase-change material R₃ are used in the first process of the third cycle process, and a thermochromic material Q₄ and a phase-change material R₄ are used in the first process of the fourth cycle process. As described above, Q₁ ≠ Q₂ ≠ Q₃ ≠ Q₄ and/or R₁ ≠ R₂ ≠ R₃ ≠ R₄, and different types of thermochromic materials and/or phase-change materials are used in each of the cycle processes. Accordingly, first to fourth thermochromic particles P₁, P₂, P₃, and P₄ having different coloring and decolorizing properties according to temperature may be manufactured as the four (four groups) thermochromic particles P. That is, the four thermochromic particles P₁, P₂, P₃, and P₄ may include different types of thermochromic materials (dyes) and/or phase-change materials in the cores 10 thereof, so that the multi-thermochromic property may be secured due to different coloring and decolorizing properties in individual temperature sections (ΔT₁ to ΔT₆).

### <Second step> Manufacture of multi-thermochromic beads B

A plurality (n groups) of thermochromic particles P (P₁, P₂, P₃, P₄ .... Pₙ) is manufactured as above and then supported in the support 100 to form beads B. To this end, this second step includes process a) of obtaining a support-forming solution including a binder and a curing agent, process b) of adding the plurality of thermochromic particles P (P₁, P₂, P₃, P₄ .... Pₙ) manufactured in the first step to the support-forming solution, followed by mixing, thus obtaining a bead-forming mixture solution, and process c) of allowing the bead-forming mixture solution to drip on the emulsification solution, followed by curing, thus forming multi-thermochromic beads B.

The process a) is performed, for example, at room temperature (5 to 35°C) to obtain the support-forming solution including at least the binder and the curing agent. The type of the binder is as described above. The curing agent may be any one that is capable of curing the binder to form the support 100. The curing agent may be selected depending on the type of the binder, and may be selected from, for example, amines and/or alcohols. Specific examples of the curing agent may be selected from among 1,4-diacarbicyclo[2,2,2]octane, (2-dimethylaminoethyl) ether, trimethylaminoethylethanolamine, pentamethyldiethylenetriamine, dimethylethanolamine, dimethylaminopropylamine, normal-ethyl morpholine, N,N-dimethylaminoethyl morpholine, N,N-dimethylcyclohexylamine, 2-methyl-2-azanorbornane, ethylene glycol, propylene glycol, glycerol, trimethylolpropane, hexanetriol, pentatriol, diethylene glycol, tripropylene glycol, polyoxytetramethylene glycol, polyoxyhexamethylene glycol, polyoxynonamethylene glycol, polyoxydetamethylene glycol, polyoxydodecamethylene glycol, triethylene glycol, 1,4-butylene glycol, 1,3-butylene glycol, 1,6-hexanediol, trimethylolethane, trimethylolpropane, 1,2,6-hexatriol, pentatriol, dipentatriol, tripentatriol, polypentatriol, sorbitol, methylglucoside, and/or sucrose.

The support-forming solution may include 4 to 20 parts by weight of the binder and 0.2 to 10 parts by weight of the curing agent as main materials. Further, the support-forming solution may further include a solvent for dissolving or dispersing the binder. The solvent may be selected from, for example, water and/or a hydrocarbon-based organic solvent, and may be included in an amount of 3 to 9 parts by weight. Moreover, the support-forming solution may further include an additive as necessary. The additive may be selected from, for example, a sunscreen agent, a heat stabilizer, and/or a light stabilizer, and may be used in an appropriate amount within a range that does not reduce the thermochromic property.

In the process b), a plurality of thermochromic particles P manufactured in the first step is added to the support-forming solution obtained in the process a), and is mixed and agitated at room temperature, thus obtaining the bead-forming mixture solution. The plurality of thermochromic particles P is added and mixed at an appropriate ratio according to the purpose (use) of the beads B. That is, the thermochromic particles P (P₁, P₂, P₃, P₄ .... Pₙ) are added and mixed at an appropriate ratio in consideration of the purpose (use) according to the coloring and decolorizing of the first to n-th thermochromic particles P (P₁, P₂, P₃, P₄ .... Pₙ).

For example, when the first thermochromic particle P₁, the second thermochromic particle P₂, the third thermochromic particle P₃, and the fourth thermochromic particle P₄ are used as the four thermochromic particles P and are used for the purpose of coloring into black, red, blue, yellow, and white colors in respective temperature sections, as shown in FIG. 3, the first thermochromic particle P₁ (black color), the second thermochromic particle P₂ (red color), the third thermochromic particle P₃ (blue color), and the fourth thermochromic particle P₄ (yellow color) may be added and mixed at a weight ratio of 1 to 3 : 0.05 to 0.5 : 0.05 to 0.5 : 0.05 to 0.5.

In the process c), the bead-forming mixture solution obtained in the process b) is allowed to drip on the emulsification solution and cured, thus generating the multi-thermochromic beads B. Through this process c), the binder is thermally cured to form a support 100, and a plurality of thermochromic particles P is supported in the support 100. The emulsification solution includes an emulsifier and a solvent, and the specific types thereof are as described in the first step. The emulsification solution may facilitate formation of the support 100, thereby increasing the yield of beads B.

Further, in the process c), after the emulsification solution is maintained at the curing temperature of the binder, the bead-forming mixture solution is allowed to drip thereon. The curing temperature may be any temperature at which the binder is capable of being thermally cured, and may depend on the type of binder. For example, when polydimethylene siloxane (PDMS) is used as the binder, the emulsification solution may be maintained at 80 to 150°C. Moreover, the process c) may be performed with agitation at, for example, about 100 to 500 rpm for the purpose of favorable dispersibility.

According to a preferred embodiment, the process c) may include process c-1) of receiving (charging) the bead-forming mixture solution obtained in the process b) in an injector, and process c-2) of maintaining the emulsification solution at the curing temperature of a binder and allowing the bead-forming mixture solution to drip on the emulsification solution using the injector, so that the binder is cured to thus form beads B. The process c-2) is performed while the emulsification solution is agitated at about 100 to 500 rpm.

The injector may be any one that is capable of receiving the bead-forming mixture solution and injecting (dripping) the received bead-forming mixture solution into the emulsification solution. As the injector, for example, a cylinder pump and a syringe may be used, and commercially, a cylinder pump may be helpfully used. Further, in the process c), an injector such as a cylinder pump is used, and it is preferable that the bead-forming mixture solution be allowed to drip in the form of droplets. This may be useful to the yield of the beads B and the uniform particle size distribution of the beads B.

When the curing (bead formation) is finished through the above process c), spherical beads B are formed with high yield, in which a spherical support 100 is formed on the outermost side due to the curing of the binder and a plurality of thermochromic particles P is supported and fixed in the support 100. Subsequently, the formed beads B may be separated and obtained using filtration and/or centrifugation to then be used in various industries.

### [3] Use of multi-thermochromic bead

The use of beads B according to the present disclosure is not particularly limited, and the beads may be helpfully used as a thermochromic functional material. The beads B may be used for purposes of, for example, heating, heat insulation, temperature control, design, and/or visibility.

Further, the present disclosure provides products including the beads B of the present disclosure used for the above-described purposes. The products according to the present disclosure include finished and/or semi-finished products, and are not limited, as long as they include the beads B according to the present disclosure. The products according to the present disclosure may be selected from, for example, building materials, paints, varnishes, ink, textiles, clothing, stationery, packaging materials, electronic devices, energy storage devices (such as batteries), display devices (such as signboards, billboards, and signs), cooling/heating devices, and/or temperature display devices (such as indoor/outdoor temperature indicators).

According to an embodiment, the products according to the present disclosure may be selected from building materials. Further, the building material includes a roof finishing material, an exterior wall material, an interior material, a floor material, and/or an insulation material (insulation board) of a building. In one example, the building material may be selected for exterior use on a building. FIG. 4 is a view showing the constitution of the cross-section of the building material according to the embodiment of the present disclosure.

Referring to FIG. 4, the building material according to the present disclosure may include a substrate 210 and beads B formed on the substrate 210. The substrate 210 may include, for example, materials such as a synthetic resin material, wood, a concrete material, a cement material, a ceramic material, and/or a metal material. Further, the substrate 210 may have, for example, a film, a panel, a board, a frame, a block, an assembly thereof, and/or a three-dimensional structure other than these. Specifically, the substrate 210 may include, for example, a synthetic resin film and/or an insulation board (such as polystyrene foam).

The beads B may be applied as a thermochromic layer 220 on the surface of the substrate 210. The beads B may be bonded to the surface (one side or both sides) of the substrate 210 using thermal fusion to thus form the thermochromic layer 220, or may be bonded thereto using an adhesive to thus form the thermochromic layer 220. For example, the thermochromic layer 220 may be formed by applying a thermochromic composition including beads B and an adhesive on the surface of the substrate 210. Further, the beads B may be applied in a state of being dispersed in the substrate 210. For example, the beads B may be added to and mixed with a material for the manufacture of the substrate 210, and may then be dispersed and applied in the substrate 210.

Since the building material according to the present disclosure includes the beads B having the multi-thermochromic property, as described above, it is possible to secure excellent heating properties and thermal insulation according to seasonal changes in winter and summer and also actively realize various colors according to temperature changes, thus imparting a beautiful appearance (color design) to a building.

Specifically, as shown in FIG. 3, since the building material includes the multi-thermochromic beads B, the building material is colored so as to have a black color in a first temperature section (ΔT₁) of T₁ or lower, so that heat (light) is absorbed (in winter), and the building material is colored so as to have a white color in a fifth temperature section (ΔT₅) of T₄ or higher, so that heat (light) is reflected (in summer). Accordingly, the heating property may be secured in winter, and the thermal insulation (heat absorption prevention) may be secured in summer. Further, the building material may be colored so as to have red, blue, and yellow colors in the second to fourth temperature sections (ΔT₂ to ΔT₄) between T₁ and T₄, thus imparting a beautiful appearance (color design) according to temperature changes. As described above, T₁ may be 12 to 18°C and T₄ may be 27 to 33°C.

Further, a method of manufacturing a building material according to the present disclosure includes the above-described process of manufacturing the beads B. That is, the method of manufacturing the building material according to the present disclosure may include a process of manufacturing the beads B including the first and second steps, and a process of applying the beads B manufactured therein to building materials.

According to the present disclosure described above, for example, the following effects are provided.

First, as described above, the thermochromic material (and phase-change material) sensitive to the surrounding environment is primarily protected from the outside by the outermost support 100, and is secondarily protected by the polymer shell 20 surrounding the surface. Accordingly, durability is improved, which enables reversible and repeated color change, and temperature sensitivity and coloring properties may be ensured.

Further, multiple active color changes may be secured according to the ambient temperature, so it is possible to adjust the temperature and also to adjust the absorptivity and reflectance of heat (light). Accordingly, when the beads are applied to building materials, it is possible to secure excellent heating properties and thermal insulation and impart a beautiful appearance (color design). Moreover, the beads B according to the present disclosure are applicable in practice to building materials and other industrial fields due to improvement of the durability and multiple active color changes thereof, and the range of application thereof is wide.

Further, according to the present disclosure, color uniformity may be maintained. In realizing the multi-thermochromic property, a method of mixing the thermochromic particles P for use without supporting the thermochromic particles P in the support 100 may be considered. For example, when the first particle P₁ and the second particle P₂ having different coloring and decolorizing properties are mixed to be used as the two thermochromic particles P (P₁ and P₂), the color of the bead may be thermally changed into different colors in two or more temperature sections. For example, when this is applied to the thermochromic layer 220 shown in FIG. 4, since the particles P (P₁ and P₂) are not capable of being completely uniformly dispersed, in some cases, there may be a cluster of the first particles P₁ or a cluster of the second particles P₂. That is, a certain part of the thermochromic layer 220 may have a greater distribution of the first particles P₁ than other parts. In a region having a greater distribution of the first particles P₁, coloring caused by the second particle P₂ may be degraded, so the colors may not be uniform. For example, almost the entire surface of the thermochromic layer 220 is colored so as to have a bright blue color, but a specific region (cluster) having a greater distribution of the first particles P₁ may be colored so as to exhibit light blue or other colors. Accordingly, the color uniformity of the thermochromic layer 220 may be degraded.

However, according to the present disclosure, when the thermochromic particles P are supported in the support 100, the color uniformity of the thermochromic layer 220 may be maintained. That is, the beads B of the present disclosure are manufactured using the same method, and in each of the beads B, the first particle P₁ and the second particle P₂ are supported at almost the same ratio through the second step, so there is no clustering phenomenon of the particles P₁ and P₂. Further, in the present disclosure, the beads B are manufactured using thermal curing after dripping in the form of droplets in the emulsification solution, and thus have almost the same size, whereby mixing may be performed with a uniform distribution. Accordingly, the color uniformity of the thermochromic layer 220 may be maintained.

### Best Mode

Hereinafter, Examples of the present disclosure are illustrated. The following Examples are provided merely to help the understanding of the present disclosure, but the technical scope of the present disclosure is not limited thereby.

### [Example 1] - Manufacture of thermochromic particle

### <Preparation Example 1>

0.1 parts by weight of lactone fluorane as a lactone-based leuco dye, 0.4 parts by weight of alcohol as a dereloper, 1 part by weight of 1-dodecanol as a phase-change material, 3 parts by weight of acrylic resin as a polymer, and 4 parts by weight of methanol as a solvent were placed into a container and then sufficiently agitated at 60°C at 300 rpm, thus obtaining a particle-forming solution.

1 part by weight of carboxylate as an emulsifier and 30 parts by weight of water (distilled water) were placed into a homogenizer (IKA T-25 homogenizer) and were sufficiently heated until about 60°C with agitation, thus obtaining an emulsification solution in which carboxylate was well dispersed. Subsequently, the particle-forming solution obtained in the above process was added thereto and then agitated at 60°C at 4,000 rpm for 15 minutes, thereby achieving emulsification.

Next, a curing solution including 0.3 parts by weight of dimethylethanolamine as a curing agent and 3 parts by weight of water (distilled water) mixed therein was placed into the emulsification solution and agitated at 60°C at 400 rpm for 1 hour. Subsequently, in order to cure the polymer (acrylic resin), agitation was performed at about 80°C at 400 rpm for 7 hours, thus curing the shell (encapsulation).

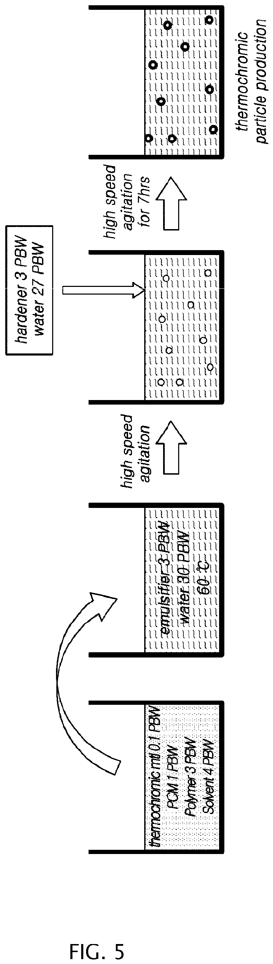

Through the above-described process, the thermochromic particles encapsulated so as to have a micrometer (µm) size were manufactured. Further, the accompanying FIG. 5 is a mimetic view showing the above-described process of manufacturing the thermochromic particles.

### <Preparation Examples 2 to 4>

The thermochromic particles were manufactured using the same method as in Preparation Example 1, except that the agitation speed (rotation speed) of a homogenizer was changed in emulsifying and curing processes according to Preparation Examples 2 to 4. All other conditions were the same.

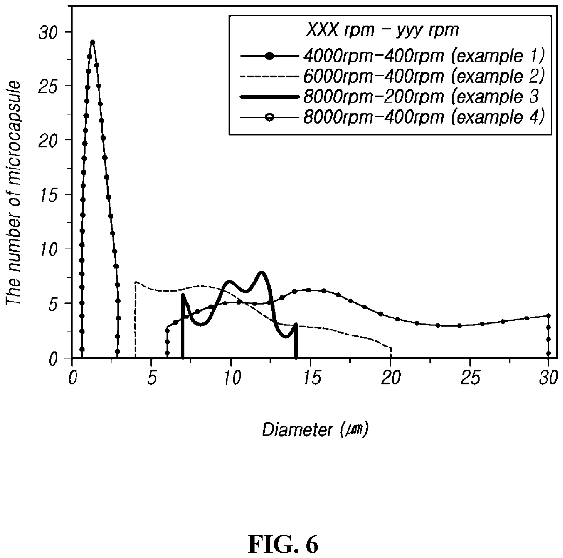

The accompanying FIG. 6 shows the particle size distribution of the thermochromic particles according to Preparation Examples 1 to 4. In FIG. 6, "xxx rpm" is the agitation speed of the emulsifying process, and "yyy rpm" is the agitation speed of the curing process.

In the accompanying FIG. 6, it can be seen that the particle size distribution of the capsule particles depended on the agitation speed in the emulsifying and curing processes. In particular, it can be seen that the agitation speed (xxx rpm) in the emulsifying process (second process) had a great influence on the distribution (uniformity) of the particles. Through this, it can be seen that when agitation was performed at about 7,000 to 9,000 rpm in the emulsifying process (second process) and at about 300 to 500 rpm in the curing process (third process), a uniform particle size distribution was secured.

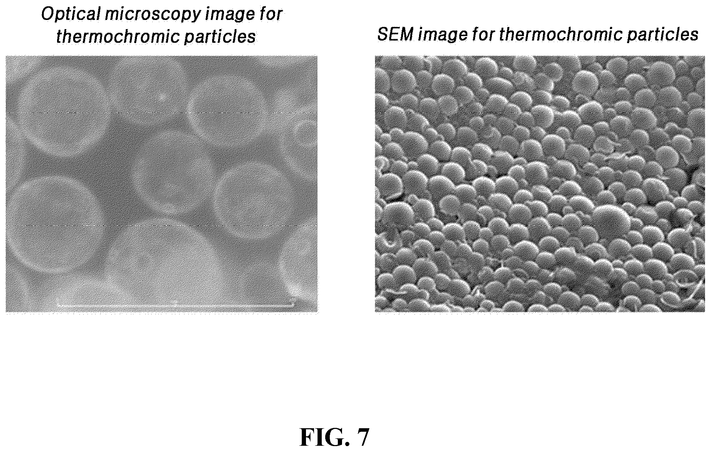

Further, the accompanying FIG. 7 shows the thermochromic particles according to Preparation Example 4. FIG. 7A is an optical micrograph of the thermochromic particles. FIG. 7B shows an SEM image of the thermochromic particles. In FIGS. 6 and 7, it can be seen that when agitation was performed at 8,000 rpm in the emulsifying process (second process) and at 400 rpm in the curing process (third process) to perform curing according to Preparation Example 4, thus manufacturing the particles, thermochromic particles having a uniform particle size distribution of about 0.5 to 3 µm (average particle size of about 2 µm) were manufactured with high yield in the present Experimental Example.

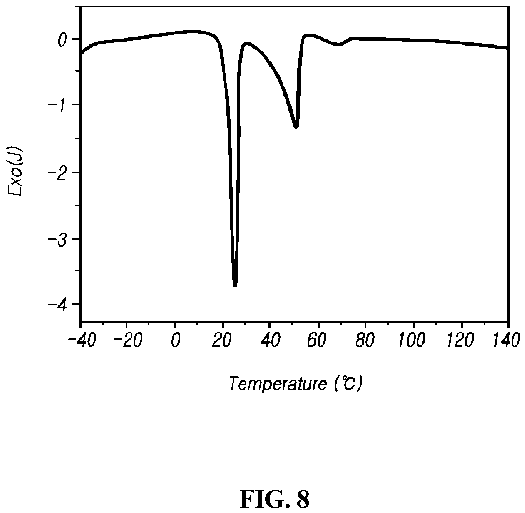

Meanwhile, the accompanying FIG. 8 is a differential scanning calorimeter (DSC) graph of the thermochromic particles according to Preparation Example 4. Since the peak of 1-dodecanol having a melting point of 24°C as the phase-change material is shown to be large, it could be seen that latent heat and heat storage performances were shown in the vicinity of about 24°C due to the phase-change material, as in FIG. 8.

### [Example 2] - Manufacture of multi-thermochromic bead

### (1) Manufacture of particle

The thermochromic particles were manufactured according to Preparation Example 4, showing the best results for particle distribution characteristics in Example 1, except that the thermochromic material and the phase-change material were changed. All other conditions except for the thermochromic material and the phase-change material were the same as those in Preparation Example 4. The particle-manufacturing process according to Preparation Example 4 was repeated to manufacture a total of four thermochromic particles having different thermochromic properties for individual temperatures. The following [Table 1] shows the types and amounts of the thermochromic material and the phase-change material used in the manufacture of the thermochromic particles.

**[Table 1]**

| | | | | | |
|---|---|---|---|---|---|
| <Composition of thermochromic particles, unit: parts by weight> | | | | | |

| Note | | First particle | Second particle | Third particle | Fourth particle |
|---|---|---|---|---|---|
| Thermochromic material | Type | A | B | C | D |
| | Amount used | 0.2 | 0.2 | 0.6 | 1 |
| Phase transition material | Type | 1-dodecanol | | | |
| | Amount used | 4 | 12 | 4 | 8 |
| *A: Dibutyl amino-6-methyl-7-anylnofluorane *B: Rhodamine B lactam *C: 3-diethylamino-6-methyl-7-chlorofluorane *D: 3,6-methoxyfluorane | | | | | |

### (2) Manufacture of bead

First, 30 parts by weight of water (distilled water) was added to 1 part by weight of carboxylate as an emulsifier and then sufficiently heated until about 60°C with agitation, thus obtaining an emulsification solution in which carboxylate was well dispersed.

Next, 0.2 parts by weight of pentatriol as a curing agent was added to 4 parts by weight of polydimethylene siloxane (PDMS) and then agitated, and the manufactured thermochromic particles were sequentially added thereto, followed by agitation at room temperature at about 200 rpm for 15 minutes for thorough mixing. When the thermochromic particles were added, the first particle (black color), the second particle (red color), the third particle (blue color), and the fourth particle (yellow color) were sequentially added at a weight ratio of 2 : 0.1 : 0.1 : 0.1 (= first particle : second particle : third particle : fourth particle) and agitated, thus obtaining a bead-forming mixture solution.

The bead-forming mixture solution was placed into a syringe and was then allowed to slowly drip on the emulsification solution. In order to cure polydimethylene siloxane (PDMS), the emulsification solution was maintained at 110°C, and the bead-forming mixture solution was allowed to drip with agitation at about 200 rpm to perform the curing, thus forming multi-thermochromic beads. Thereafter, the formed multi-thermochromic beads were filtered and then dried at room temperature.

In order to check the color change of the multi-thermochromic beads manufactured as described above according to temperature, the following procedure was performed.

First, after a round hot plate was heated to 80°C in an oven, the manufactured multi-thermochromic beads were placed thereon. The multi-thermochromic beads were colored so as to have a white color at 80°C (initial). Thereafter, cooling was gradually performed at room temperature to observe a color change process over time.

The initial white multi-thermochromic beads (80°C) were colored so as to have a bright yellow color after about 10 seconds (about 65°C) and to have light green and light red colors after about 55 seconds (about 50°C) over time (temperature change). Thereafter, after about 135 seconds (about 45°C), the yellow color was almost removed and the beads were colored so as to have a dark red color. Through this, it could be seen that the colors of the multi-thermochromic beads including polydimethylene siloxane (PDMS) as a support were changed into various colors according to temperature due to a plurality of thermochromic particles having different thermochromic (coloring and decolorizing) properties according to temperature.

### * Description of Reference Numerals *

| | | | |
|---|---|---|---|
| 10: | Core | 20: | Polymer shell |
| 100: | Support | 210: | Substrate |
| 220: | Thermochromic layer | P: | Thermochromic particle |
| B: | Multi-thermochromic bead | | |

## Claims

1. An exterior building material comprising:
a multi-thermochromic bead (B), a color of which thermally changes into various colors according to temperature.

2. The exterior building material of claim 1, wherein the multi-thermochromic bead (B) includes:
a support (100); and
a plurality of thermochromic particles (P), which are supported in the support (100) and colors of which thermally change into different colors according to temperature, and
each of the thermochromic particles (P) includes a core (10) including a thermochromic material and a phase-change material, and a polymer shell (20) formed on a surface of the core (10).

3. The exterior building material of claim 2, wherein the multi-thermochromic bead (B) includes n thermochromic particles (P) (P₁ to Pₙ) (n being a natural number of 2 or more), colors of which thermally change into different colors according to temperature, and each of the thermochromic particles (P) (P₁ to Pₙ) includes different types of one or more materials selected from the thermochromic material and the phase-change material included in the core (10) so that colors thereof thermally change into different colors according to temperature.

4. The exterior building material of claim 3, wherein the multi-thermochromic bead (B) includes first to fourth thermochromic particles (P) (P₁, P₂, P₃, P₄) as four thermochromic particles (P) (P₁ to P₄), colors of which thermally change into different colors according to temperature, and develops a black color at a temperature of T₁ or lower, a white color at a temperature of T₄ or higher, and one or more colors selected from red, blue, and yellow colors at a temperature between T₁ and T₄, T₁ ranges from 12 to 18°C, and T₄ ranges from 27 to 33°C.

5. A method of manufacturing an exterior building material, including a process of manufacturing a multi-thermochromic bead (B), a color of which thermally changes into various colors according to temperature, the process comprising:
a first step of manufacturing a plurality of thermochromic particles (P), colors of which thermally change into different colors according to temperature; and
a second step of supporting the plurality of thermochromic particles (P) in a support (100),
wherein the first step includes:
a first process of obtaining a particle-forming solution including a thermochromic material, a phase-change material, a polymer, and a solvent;
a second process of adding the particle-forming solution to an emulsification solution including an emulsifier, followed by agitation, thus obtaining an emulsion; and
a third process of adding a curing agent to the emulsion, followed by agitation, thus obtaining the thermochromic particles (P) that include a core (10) including the thermochromic material and the phase-change material and a polymer shell (20) formed on a surface of the core (10) through curing of the polymer,
the first process to the third process are set as one cycle process,
the cycle process is performed n or more times (n being a natural number of 2 or more) to manufacture the plurality of thermochromic particles (P), and
different types of one or more materials, which are selected from the thermochromic materials and the phase-change materials, are used in the first process of each cycle process to thus manufacture the plurality of thermochromic particles (P), colors of which thermally change into different colors according to temperature.

6. The method of claim 5, wherein the particle-forming solution is added to the emulsification solution and is then agitated at an agitation speed of 7,000 to 9,000 rpm to obtain the emulsion in the second process, and the curing agent is added to the emulsion and then agitated at an agitation speed of 300 to 500 rpm for 5 hours or more in the third process, thus manufacturing the plurality of thermochromic particles (P) having a size of 0.5 to 3 µm in the first step.

7. The method of claim 5, wherein the third process includes, after adding the curing agent to the emulsion,
step 1) of performing first agitation at a temperature that is lower than a curing temperature of the polymer; and
step 2) of performing second agitation at the curing temperature of the polymer at an agitation speed of 300 to 500 rpm for 5 hours or more.

8. The method of claim 5, wherein the second step includes:
process a) of obtaining a support-forming solution including a binder and the curing agent;
process b) of adding the plurality of thermochromic particles (P) manufactured in the first step to the support-forming solution, followed by mixing, thus obtaining a bead-forming mixture solution; and
process c) of allowing the bead-forming mixture solution to drip on the emulsification solution, followed by curing, thus forming the multi-thermochromic bead (B) in which the plurality of thermochromic particles (P) is supported in the support (100) formed through curing of the binder.

9. The method of claim 8, wherein the process c) includes:
process c-1) of receiving the bead-forming mixture solution obtained in the process b) in an injector; and
process c-2) of maintaining the emulsification solution at a curing temperature of the binder and allowing the bead-forming mixture solution to drip on the emulsification solution using the injector, followed by agitation at 100 to 500 rpm, thus forming the multi-thermochromic bead (B).
